# EUROPÄISCHE PATENTSCHRIFT

(11) **EP 3 907 412 B1**
(45) Veröffentlichungstag und Bekanntmachung des Hinweises auf die Patenterteilung: **14.12.2022**
(21) Anmeldenummer: 20172686.6
(22) Anmeldetag: 04.05.2020
(51) Int. Cl.: F16B 7/04

(54) **MULTIFUNKTIONALES KLEMMSTÜCK**
MULTIFUNCTIONAL CLAMPING PIECE
PIÈCE DE SERRAGE MULTIFONCTION

(43) Veröffentlichungstag der Anmeldung: 10.11.2021
(73) Patentinhaber: Multipond Wägetechnik GmbH, 84478 Waldkraiburg (DE)
(72) Erfinder: PETERS, Andreas, 84544 Aschau am Inn (DE)
(74) Vertreter: Prüfer & Partner mbB Patentanwälte · Rechtsanwälte

(56) Entgegenhaltungen:
- EP-A1- 2 918 855
- DE-A1- 3 237 362
- FR-A- 940 008
- US-A1- 2010 005 636

## Beschreibung

Die vorliegende Erfindung bezieht sich auf ein Klemmstück, mit welchem Bauteile, wie beispielsweise Rohre und Stangen, geklemmt und somit miteinander oder mit einer Fläche verbunden werden können.

Solche Klemmstücke kommen in verschiedenen Bereichen zum Einsatz, beispielsweise beim Aufbau von Rahmen an Anlagen, für Stative im Laborbereich sowie zur Befestigung von Anlagenkomponenten.

Besonders in der Lebensmittelindustrie bzw. lebensmittelverarbeitenden Industrie herrschen hohe Anforderungen an die hygienegerechte Gestaltung von Anlagen und auch Anlagenteilen, um eine einfache und sichere Reinigung zu gewährleisten. Nicht hygienegerecht ausgestaltete Anlagenteile können das Risiko einer Kontamination durch Mikroorganismen der ganzen Anlage erhöhen, ebenso wie den Eintrag von Verunreinigungen fördern.

Für eine hygienegerechte Gestaltung ist es daher notwendig, dass sämtliche Anlagenteile nicht durch einen Anstieg der Konzentration von relevanten Mikroorganismen (Biofilm), Schmutz, Insekten, anderem Ungeziefer oder Verunreinigungen belastet werden, welche sich häufig in Vertiefungen, Spalten, Schlitzen, Toträumen oder aber freiliegenden Gewinden anlagern.

Anlagenteile von Anlagen der Lebensmittelindustrie sowie lebensmittelverarbeitenden Industrie weisen sehr häufig Klemmverbindungen auf. Beispiele hierfür sind Bedieneinheiten, beispielsweise Touch-Bedieneinheiten, oder auch verschiedene Kamerasysteme zur Überwachung einer Anlage, welche auch teilweise der Steuerung des Produktflusses dienen. Bei der Befestigung solcher Komponenten kommen üblicherweise verschiedene Rahmenstrukturen und Rohre zum Einsatz, wie beispielsweise Edelstahlrohre. Zur Verbindung der einzelnen Rahmenteile und Befestigung der einzelnen Komponenten werden standardmäßig Kreuzklemmstücke verwendet, auch Parallelverbinder sind möglich.

Im Stand der Technik ist beispielsweise das Patentdokument EP 2 918 855 A1 bekannt, welches ein Kreuzklemmstück mit einem Dichtprofil offenbart. Dieses Dichtprofil ist durchgängig aus einem Stück gefertigt und umschließt ein geklemmtes Teil auf beiden Seiten der Klemmvorrichtung und dichtet somit die Spalten zwischen geklemmtem Teil und Klemmvorrichtung lückenlos ab und füllt zudem weiterhin den Spannschlitz komplett aus. Hierdurch entstehen in einem Verbindungsteil, insbesondere Kreuzklemmstück, keine Spalten, Rillen, sonstigen Toträume oder Vertiefungen, in welchen sich Kondenswasser, Produktrückstände oder andere Verunreinigungen ansammeln könnten, denn es sind alle Spalten und Hohlräume ausgefüllt bzw. abgedichtet, und es liegen auch keine Gewinde offen, da diese vom durchgängigen Dichtprofil umschlossen sind.

Weiterhin ist das Dokument EP3017225A1 bekannt, welches eine Klemme mit mehreren Dichtelementen darstellt. Dieses System umfasst eine Halterung für Rohrprofile mit einem Körper mit einem Mittelloch zum Einschließen eines Rohrprofils im Mittelloch, wobei der Körper mindestens zwei nicht elastische Halterungsteile mit Innenflächen zum Mittelloch hin und Außenflächen aufweist. Die Halterung hat eine Form, die eine hygienisch dichte Verbindung zwischen Halterung und Rohrprofil gewährleistet und das Rohrprofil mechanisch unterstützt. Die Halterung kann daher in Umgebungen mit hohen Hygieneanforderungen, z.B. in der Lebensmittelindustrie, eingesetzt werden.

Im Stand der Technik ist weiterhin das Dokument EP 0 078 589 A1 bekannt, in welchem ein zu klemmendes Teil vollständig von einem Klemmabschnitt umschlossen ist, wobei die Verspannung über eine im Klemmabschnitt enthaltene Schraube gesteuert werden kann.

Weiterhin ist im Stand der Technik das Dokument EP 1 754 893 A2 bekannt, welches ein Klemmstück zum Klemmen eines stangenförmigen Bauteils offenbart, wobei eine Klemmhülse geschlitzt ist und zwei Klemmbacken aufweist, welche über ein Spannmittel gegeneinander bewegbar sind. Jedoch ist die Klemmhülse außenseitig von einem geschlossenen, einstückigen Gehäuse umhüllt, so dass die Hygienevorschriften eingehalten werden können und keine Gewinde freiliegen und nach außen hin keine Schlitze, Hohlräume oder sonstige Vertiefungen entstehen.

Im Dokument DE 20 2005 012 886 U1 ist ferner ein Klemmstück offenbart, welches einen Stab oder ähnliches Bauteil aufnehmen kann. Auch hier sind keine Klemmschlitze vorhanden, vielmehr ist im Klemmabschnitt ein Sackloch vorhanden, in welches eine Schraube eingeführt ist, und diese Schraube steuert die Verspannung der Klemmbacken.

Im Dokument FR 940 008 ist eine Klemmvorrichtung offenbart, in welcher mehrere Kolben miteinander verbunden ist, welche jeweils ein Klemmteil klemmen können.

Im Dokument DE 32 37 362 ist ferner eine Klemmvorrichtung mit zwei Klemmbacken offenbart, welche im hinteren Bereich Innengewinde aufweisen.

Ferner ist im Dokument EP 2 918 855 ein durchgängiges Dichtprofil zur Verwendung in einem Kreuzklemmstück offenbart, wobei das Kreuzklemmstück mehrere Spannvorrichtungen aufweist, mit welchem Klemmbacken durch Verringern der Breite eines Klemmspaltes zu klemmende Teile klemmen können.

Ferner ist im Dokument US2010/005636 ein Kamerahalter mit einer Verbindungsvorrichtung, die an einem beweglichen Objekt, wie z.B. einem Fahrrad oder einem Helm des Fahrers, angebracht ist, offenbart.

Der Nachteil der Systeme im Stand der Technik ist die komplexe Ausführung der Rahmenstrukturen mit dem Ziel, Bauteile an einer Grundposition zu befestigen oder in einem vorgegebenen Bereich verstellen zu können.

Gemäß dem Stand der Technik kann ein Winkel zwischen mindestens zwei geklemmten Bauteilen oder mindestens einem Bauteil zu einer Fläche im Stand der Technik nicht ohne vorheriges Entfernen mindestens eines Klemmteils flexibel verstellt werden, und ferner sind für die hygienegerechte Gestaltung zusätzliche Bauteile wie beispielsweise Gehäuse oder Dichtprofile nötig.

Es ist daher die Aufgabe der vorliegenden Erfindung, ein variables Klemmstück zur Verfügung zu stellen, bei welchem der Winkel zwischen mindestens zwei Klemmteilen oder mindestens einem Teil zu einer Fläche ohne vorheriges Entfernen eines Klemmteils variabel verstellbar ist, welches hygienegerecht ausgestaltet ist und welches möglichst leicht bedient werden kann.

Diese Aufgabe wird durch eine Klemmvorrichtung mit den Merkmalen gemäß Anspruch 1, durch ein System mit den Merkmalen gemäß Anspruch 13 sowie eine Verwendung mit den Merkmalen gemäß Anspruch 14 gelöst. Weitere vorteilhafte Ausgestaltungen der Erfindung sind Gegenstand der abhängigen Ansprüche.

Die Erfindung beinhaltet eine Klemmvorrichtung, mit welcher Klemmteile verbunden und geklemmt werden können. Diese Klemmvorrichtung umfasst ein Verbindungsgelenk, mindestens einen Klemmabschnitt, der jeweils ein Übertragungselement aufweist, sowie ein Spannelement.

Das Spannelement ist am Verbindungsgelenk angeordnet und hat eine erste Endposition in einem gespannten Zustand sowie eine zweite Endposition in einem entspannten Zustand. Im gespannten Zustand drückt jeweils ein Übertragungselement gegen ein Klemmteil, wodurch das Klemmteil zwischen dem Übertragungselement und einem Klemmabschnitt geklemmt ist und somit fixiert ist.

In einem entspannten Zustand ist ein Klemmteil in einem Klemmabschnitt bewegbar, da im Klemmabschnitt Spiel entsteht, das Übertragungselement nicht mehr am Klemmteil anliegt und das Klemmteil somit bewegbar ist.

Im entspannten Zustand ist der mindestens eine Klemmabschnitt zudem relativ zum Verbindungsgelenk verdrehbar - bei zwei oder mehr Klemmabschnitten sind diese auch gegeneinander verdrehbar. Alternativ kann das Verbindungsgelenk an einer Seite auch an eine Fläche fest und abgedichtet angebunden sein - somit ist dann ein Klemmabschnitt gegenüber dem Verbindungsgelenk verdrehbar.

Im gespannten Zustand ist der mindestens eine Klemmabschnitt am Verbindungsgelenk - vorzugsweise durch Reibschluss - fixiert und ist somit nicht verdrehbar. Die Fixierung des Drehfreiheitsgrades kann jedoch nur erfolgen, wenn ein Klemmteil durch den Klemmabschnitt geführt ist.

Eine solche Klemmvorrichtung ermöglicht es, dass durch Bewegung eines einzigen Spannelements, beispielsweise einer Schraube, sowohl die Klemmung von Klemmteilen in dem mindestens einen Klemmabschnitt vorgenommen werden kann, als auch ein zusätzlicher Freiheitsgrad, nämlich das Verdrehen des mindestens einen Klemmabschnitte relativ zum Verbindungsgelenk und, bei mehr als einem Klemmabschnitt, das Verdrehen der Klemmabschnitte gegeneinander gesteuert werden kann.

Ferner sind bei dieser Klemmvorrichtung alle Spalte, Hohlräume und Gewinde mit geeigneten Dichtelementen sicher abdichtbar, weswegen sich bei dieser Klemmvorrichtung nirgendwo Schmutz oder Lebensmittelrückstände ansammeln können. Eine solche Klemmvorrichtung genügt also den Vorschriften für eine hygienegerechte Ausgestaltung von Bauteilen oder Anlagenteilen der Lebensmittelindustrie oder lebensmittelverarbeitenden Industrie.

Ferner ermöglicht diese Klemmvorrichtung eine höhere Variabilität, so dass die Positionierung und die Verstellbereiche ohne zusätzliche Bauteile ermöglicht werden können, das heißt ein Winkel, den ein Klemmteil mit einer Montageebene oder zwei Klemmteile einschließen, variabel eingestellt werden kann. Es ist also - im Gegensatz zu einem Kreuzklemmstück - nicht nur ein Winkel von 90° zwischen beiden Klemmteilen möglich, vielmehr kann der Winkelbereich variabel eingestellt werden.

Vorzugsweise ist im gespannten Zustand das mindestens eine Übertragungselement in Richtung des dem Verbindungsgelenk abgewandten Endes des Klemmabschnitts verschoben, so dass ein Klemmteil an dem dem Verbindungsgelenk abgewandten Ende des mindestens einen Klemmabschnittes bzw. der Klemmabschnitte drückt, wodurch in dem mindestens einen Klemmabschnitt Klemmteile fixierbar sind. Im entspannten Zustand ist das mindestens eine Übertragungselement in Richtung des Verbindungsgelenks verschoben, wodurch in dem mindestens einen Klemmabschnitt ein Klemmteil bewegbar ist.

Diese Ausgestaltung ermöglicht eine einfache und kompakte Bauweise und trägt zur hygienegerechten Gestaltung bei, da alle Komponenten zur Erzeugung einer Klemmwirkung im Inneren des Verbindungsgelenks vorgesehen sind und dieses sicher abdichtbar ist.

Im Verbindungsgelenk ist ein Klemmelement vorhanden, welches an mindestens einer Seite eine schräge Fläche aufweist. Diese schräge Fläche liegt wiederum an einer schrägen Fläche des mindestens einen bzw. jeweils eines Übertragungselements an. Eine Translationsbewegung des Klemmelements ruft somit eine Translationsbewegung des mindestens einen Übertragungselements und hervor, und die Translationsbewegung des Klemmelements hat eine andere Richtung als die Translationsbewegung des mindestens einen Übertragungselements, vorzugsweise sind beide Bewegungsrichtungen rechtwinklig zueinander.

Diese Ausgestaltung der Klemmvorrichtung ermöglicht es, dass der gesamte Klemmmechanismus im Inneren des Verbindungsgelenks vorgesehen ist, und durch die Anordnung von Klemmelement und Übertragungselement, wobei das mindestens eine Klemmelement und jeweils ein Übertragungselement an einer schiefen Ebene einer Seite aneinander anliegen, wird es ermöglicht, dass eine möglichst einfache und kostengünstige Ausgestaltung mit wenigen und einfachen Bauteilen ermöglicht wird.

Weiter vorzugsweise ist das Spannelement eine Schraube, die mit dem Inneren des Verbindungsgelenks und dem Klemmelement durch ein Gewinde verbunden ist, und somit ist das Klemmelement durch Drehen der Schraube entlang des Gewindes bewegbar. Dies ermöglicht ein Übertragen einer Rotationsbewegung des Spannelements, also der Schraube, in eine translatorische Bewegung des Klemmelements, welches dann wiederum das mindestens eine Übertragungselement bewegt und somit die Drehung des Spannelements auf die Bewegung der des Übertragungselements einfach und effizient übertragbar ist.

Weiter vorzugsweise ist am Verbindungsgelenk an mindestens einer Seite eine Buchse vorgesehen, welche einen ringförmig angeordneten Vorsprung aufweist. Ferner hat der mindestens eine Klemmabschnitt ebenfalls einen Vorsprung, welcher mit dem Vorsprung der Buchse in Eingriff steht, so dass der mindestens eine Klemmabschnitt am Verbindungsgelenk einerseits festgehalten wird, andererseits aber - zumindest im entspannten Zustand - drehbar ist.

Diese Ausgestaltung mit der Buchse ermöglicht eine sehr einfache Montage der Klemmvorrichtung, da der mindestens eine Klemmabschnitt so sehr einfach am Verbindungsgelenk angebracht werden kann.

Weiter vorzugsweise ist im entspannten Zustand der Vorsprung des mindestens einen Klemmabschnitts mit Spiel jeweils zwischen dem Verbindungsgelenk sowie dem Vorsprüngen der mindestens einen Buchse positioniert, und ist im entspannten Zustand relativ zum Verbindungsgelenk drehbar. Wenn zwei oder mehr Klemmabschnitte vorgesehen sind, sind diese gegeneinander verdrehbar.

Im gespannten Zustand wird der Vorsprung des Klemmabschnittes dann gegen den jeweiligen Vorsprung der Buchse gedrückt, so dass der mindestens eine Klemmabschnitt durch eine reibschlüssige Verbindung an den Vorsprung der mindestens einen Buchse fixiert ist. Somit ist der mindestens eine Klemmabschnitt bei bestimmungsgemäßen Gebrauch relativ zum Verbindungsgelenk nicht mehr drehbar. Wenn zwei oder mehr Klemmabschnitte vorgesehen sind, sind diese bei bestimmungsgemäßen Gebrauch gegeneinander auch nicht mehr verdrehbar. Wirkt auf das Klemmstück ein Moment das über den bestimmungsgemäßen Gebrauch hinausgeht, so kommt es ähnlich einer Überlastkupplung zu einer Verdrehung des Klemmabschnitts um eine Beschädigung nachgelagerter Bauteile zu verhindern.

Diese besondere Ausgestaltung ermöglicht es, dass durch das einfache Verdrehen des Spannelements, das heißt durch das Wechseln vom entspannten in den gespannten Zustand, gleichzeitig sowohl eine Bewegung des mindestens einen Übertragungselements einleitbar ist, als auch eine reibschlüssige Verbindung zwischen dem mindestens einen Klemmabschnitt und der Buchse einstellbar ist. Die Bewegung der Spannvorrichtung ermöglicht also auch eine gezielte Einstellung des Zustandes, ob der mindestens eine Klammabschnitt relativ zum Verbindungsgelenk bzw. die Klemmabschnitte gegeneinander verdrehbar sind oder nicht.

Weiter vorzugsweise ist an jeweils einem Übertragungselement eine Klemmbacke angebracht, die dazu angepasst ist, zumindest teilweise an der Umfangsfläche eines Klemmteils anzuliegen.

Eine Klemmbacke ist insbesondere für runde Klemmteile vorteilhaft. Dadurch können zwischen Klemmbacke und Klemmteil keine Hohlräume entstehen, es ist eine kraftschlüssige Verbindung vorhanden und es wird wenig Bauraum benötigt.

Vorzugsweise ist das Spannelement eine Schraube, deren Kopf auf dem Verbindungsgelenk aufliegt und die mittels einer definiert verpressten Dichtscheibe gegen das Verbindungsgelenk abgedichtet ist. Somit wird sichergestellt, dass kein Gewinde frei liegt, was der hygienegerechten Gestaltung förderlich ist, und außerdem können so keine Fremdstoffe (z.B. Flüssigkeit oder Staub), in das Innere der Klemmvorrichtung gelangen.

Vorzugsweise ist weiterhin zwischen dem mindestens einen Klemmabschnitt und dem Verbindungsgelenk jeweils mindestens ein Dichtelement vorgesehen, so dass auch hier keinerlei Fremdstoffe (z.B. Flüssigkeit oder Staub) in das Innere des Verbindungsgelenks bzw. des mindestens einen Klemmabschnitts gelangen können.

Ferner ist vorzugsweise an der Öffnung des mindestens einen Klemmabschnitts ein Dichtelement vorgesehen, welches dazu angepasst ist, sich an die Außenfläche des mindestens einen Klemmteils anzupassen.

Auch dies trägt der hygienegerechten Gestaltung Rechnung, die Anzahl der Dichtelemente kann hier aber minimiert werden, da diese nur an wenigen Stellen der Klemmvorrichtung nötig sind.

Weiter vorzugsweise ist die Klemmvorrichtung dazu angepasst, rohrförmige, polygonale oder elliptische Klemmteile zu klemmen. Die Klemmabschnitte können hier eine variable Form einnehmen, was dazu führt, dass diese in vielen verschiedenen Ausführungsformen gefertigt werden können und somit an verschiedene äußere Bedingungen anpassbar sind.

Weiter vorzugsweise ist die mindestens eine Buchse durch eine Gewindeverbindung mit dem Verbindungsgelenk verbunden.

Die Erfindung beinhaltet weiterhin ein System aus einer Klemmvorrichtung und mindestens einem Klemmteil, welches rohrförmig ist oder einen polygonalen oder elliptischen Querschnitt aufweist.

Weiter vorzugsweise wird dieses System zur Ausrichtung und Fixierung einer Kamera oder einer Anzeige- und Bedieneinheit, beispielsweise in einer Anlage der Lebensmittelindustrie oder lebensmittelverarbeitenden Industrie, vorzugsweise einer Waage oder einer Mehrkopfwaage verwendet.

Durch die flexible Einstellbarkeit der Klemmvorrichtung, gleichzeitig aber dessen hygienegerechter Ausgestaltung, eignen sich solche Klemmvorrichtungen sehr gut für Anlagen der Lebensmittelindustrie oder lebensmittelverarbeitenden Industrie.

Im Folgenden wird ein bevorzugtes Ausführungsbeispiel unter Bezugnahme auf die beigefügten Zeichnungen näher erläutert.
- Fig. 1: ist eine isometrische Ansicht der Klemmvorrichtung gemäß der ersten Ausführungsform der vorliegenden Erfindung. Hier sind an einem Verbindungsgelenk zwei Klemmabschnitte angeordnet.
- Fig. 2: ist eine Schnittansicht (längs geschnitten) einer Klemmvorrichtung gemäß der ersten Ausführungsform der vorliegenden Erfindung, wobei hier ein Klemmteil im linken Klemmabschnitt vorgesehen ist und sich die Klemmvorrichtung im gespannten Zustand befindet.
- Fig. 3: zeigt ebenfalls eine Schnittansicht (längs geschnitten) einer Klemmvorrichtung gemäß der ersten Ausführungsform der vorliegenden Erfindung, wobei hier ein Klemmteil im linken Klemmabschnitt vorgesehen ist und sich die Klemmvorrichtung im entspannten Zustand befindet.
- Fig. 4: zeigt eine Schnittansicht (quer geschnitten) der Klemmvorrichtung gemäß der ersten Ausführungsform der vorliegenden Erfindung.
- Fig. 5: zeigt eine zweite Ausführungsform der vorliegenden Erfindung in Schnittansicht (Längsschnitt). Dieses ist dazu angepasst, ein eckiges Klemmteil zu klemmen.
- Fig. 6: zeigt eine dritte Ausführungsform der vorliegenden Erfindung. Hier ist an einem Verbindungsgelenk ein Klemmabschnitt angeordnet.
- Fig. 7: zeigt eine vierte Ausführungsform der vorliegenden Erfindung in isometrischer Ansicht. Hier sind an einem Verbindungsgelenk vier Klemmabschnitte angeordnet.
- Fig. 8: zeigt eine Befestigung und Fixierung einer Kamera gemäß einer Ausführungsform des Standes der Technik.
- Fig. 9: zeigt die Befestigung und Fixierung einer Kamera mit einer Klemmvorrichtung gemäß der vorliegenden Erfindung.
- Fig. 10: zeigt die Befestigung eines Monitors an einer Stange, eine Anwendung der Klemmvorrichtung gemäß der vorliegenden Erfindung.

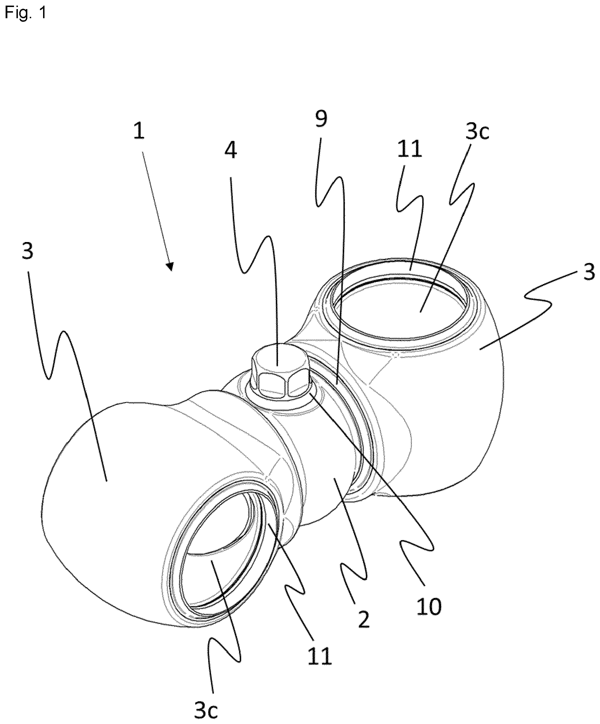

Fig. 1 zeigt die Klemmvorrichtung 1 in einer isometrischen Ansicht. Hier wird deutlich, dass an einem Verbindungsgelenk 2 an jeder Seite ein Klemmabschnitt 3 vorgesehen ist. Die Klemmabschnitte 3 enthalten jeweils eine Öffnung 3c zum Einführen und Klemmen eines Klemmteils K (hier nicht gezeigt). Zwischen dem Verbindungsgelenk und den Klemmabschnitten ist jeweils ein erstes Dichtelement 9 vorgesehen. Am oberen und unteren Ende dieser Öffnung ist jeweils ferner ein zweites Dichtelement 11 vorgesehen. Weiterhin ist ein Spannelement 4, hier in Form einer Schraube vorgesehen, welche mit dem Verbindungsgelenk verbunden ist. Unter dem Schraubenkopf ist eine Dichtscheibe 10 angeordnet, um das Eindringen von Fremdstoffen (z.B. Flüssigkeit oder Staub) in das Innere des Verbindungsgelenks 2 zu verhindern. Die Klemmvorrichtung 1 ist hier sehr kompakt vorgesehen, was zu einer platzsparenden Verwendung führt.

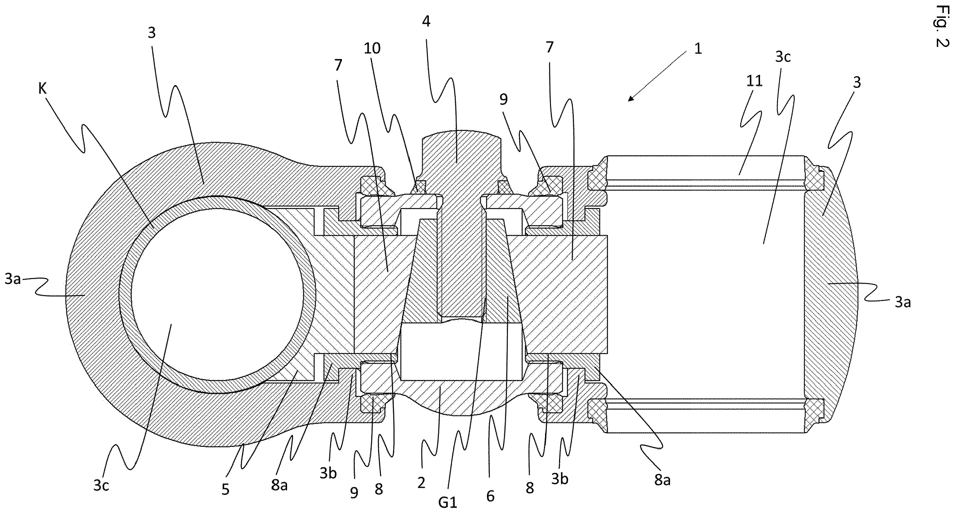

Fig. 2 zeigt eine Querschnittsansicht der Klemmvorrichtung 1, hier ein Schnitt in Längsrichtung. Fig. 2 zeigt einen Zustand, in welchem die Klemmvorrichtung im gespannten Zustand ist, das heißt in welchem ein Klemmteil K geklemmt ist. Auch hier ist die Struktur des Verbindungsgelenks 2 zu sehen, und es ist zu sehen, dass hier an der linken und rechten Seite des Verbindungsgelenks 2 jeweils ein Klemmabschnitt 3 vorgesehen ist. Dieser Klemmabschnitt 3 weist jeweils einen ringförmigen Vorsprung 3b auf. Das äußere Ende der Klemmabschnitte ist das dem Verbindungsgelenk 2 abgewandte Ende 3a. Die Klemmabschnitte 3 enthalten jeweils eine Öffnung 3c zum Einführen und Klemmen eines Klemmteils K.

Ferner ist ersichtlich, dass auf einer Dichtscheibe 10 das Spannelement 4 angeordnet ist, welches mit einem Gewinde G1 mit dem Klemmelement 6 im Verbindungsgelenk 2 verbunden ist. Somit ist durch Drehung des Spannelements das Klemmelement 6 bewegbar. Das Klemmelement 6 ist hier trapezförmig ausgebildet und hat einen gewissen Spielraum innerhalb des Verbindungsgelenks 2. Es kann also durch Drehung des Spannelements 4 nach oben bzw. unten bewegt werden. Das Klemmelement 6 weist auf beiden Seiten eine schräge Fläche auf, welche jeweils mit einer anderen schrägen Fläche jeweils eines Übertragungselements 7 in Verbindung steht und an dieser anliegt. Durch Bewegung des Klemmelements 6 nach oben oder nach unten werden hier die beiden Übertragungselemente 7 jeweils in die Links-Rechtsrichtung bewegt. An den Seitenflächen des Verbindungsgelenks ist jeweils eine Buchse 8 vorgesehen, welche durch ein Gewinde mit dem Verbindungsgelenk verbunden ist. Diese Buchsen 8 weisen jeweils einen Vorsprung 8a auf. Dieser Vorsprung 8a der Buchse 8 steht im Eingriff mit jeweils dem Vorsprung 3b des jeweiligen Klemmabschnitts 3.

Zwischen den Klemmabschnitten 3 sowie dem Verbindungsgelenk 2 ist jeweils ein erstes Dichtelement 9 vorgesehen, welches verhindert, dass Fremdstoffe (z.B. Flüssigkeit oder Staub) in die Flächen zwischen dem Verbindungsgelenk 2 und den Klemmabschnitten 3 gelangen können.

Die Klemmbacken 5 sind in den Klemmabschnitten 3 jeweils in einer entsprechenden Ausnehmung anbringbar.

Auf den Klemmabschnitten 3 sitzt an jeder Seite der Öffnung 3c ein zweites Dichtelement 11 auf, welche verhindert, dass in den Spalt zwischen Klemmabschnitt 3 und Klemmteil K (hier nicht gezeigt) Fremdstoffe (z.B. Flüssigkeit oder Staub) eindringen können.

Durch das Klemmelement 6 werden die beiden Übertragungselemente 7 nach außen gedrückt, weswegen auch die Klemmbacken 5 nach außen hin zum dem Verbindungsgelenk 2 abgewandten Ende 3a der Klemmabschnitte 3 gedrückt wurden. In dem linken Klemmabschnitt 3 ist in dieser Ansicht ein Klemmteil K in Form eines Rohrs dargestellt. Hier wird deutlich, dass dieses Klemmteil K hin zum dem Verbindungsgelenk 2 abgewandten Ende 3a des linken Klemmabschnitts 3 gedrückt ist. Dadurch wurde auch der linke Klemmabschnitt 3 nach außen verschoben, weswegen der Vorsprung 3b des linken Klemmabschnitts 3 nach außen gedrückt wurde und so nun in einer Reibschlussverbindung am Vorsprung 8a der Buchsen 8 anliegt. Somit existiert kein Spalt zwischen dem Vorsprung 3b des linken Klemmabschnitts 3 und dem Vorsprung 8a der linken Buchse 8.

Hinsichtlich des rechten Klemmabschnitts 3 ist die gleiche Konfiguration zu sehen, nur ist dieser um 90° verdreht und somit ist hier kein Querschnitt sichtbar. Auch hier sind jedoch die zweiten Dichtelemente 11 zu sehen, welche an den Öffnungen des Klemmabschnitts 3 vorgesehen sind.

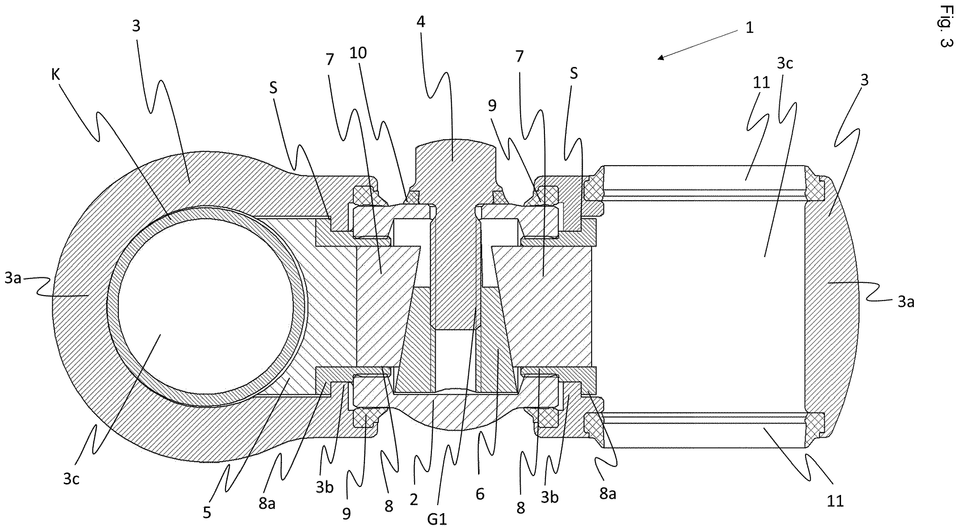

Fig. 3 zeigt grundsätzlich den gleichen Längsschnitt, nur jeweils im entspannten Zustand. Im Vergleich zu Fig. 2 ist das Klemmelement 6 hier deutlich nach unten verschoben. Dadurch wird der Druck auf die Verbindungselemente 7 und Klemmbacken 5 verringert, so dass sich diese nach innen in Richtung des Verbindungsgelenks 2 bewegen können.

Im entspannten Zustand werden die Klemmabschnitte 3 am Verbindungsgelenk 2 gehalten, können also nicht abgenommen werden oder herausfallen, gleichzeitig ist aber zwischen dem Vorsprung 3b des Klemmabschnitts und dem Vorsprung 8a der Buchse ein kleiner Spalt S vorgesehen. Der Vorsprung 3b der Klemmabschnitte hat also ein wenig Spiel zwischen dem Verbindungsgelenk 2 sowie den jeweiligen Vorsprüngen 8a der Buchsen 8. Dadurch können im entspannten Zustand die Klemmabschnitte 3 relativ zum Verbindungsgelenk 2 sowie gegeneinander verdreht werden.

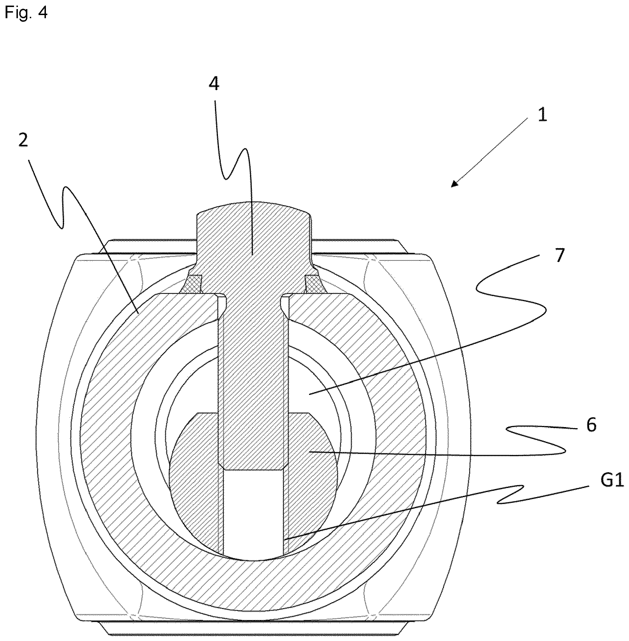

In Fig. 4 ist auch eine Schnittansicht der Klemmvorrichtung 1 gezeigt, hier allerdings im Querschnitt durch die Mitte des Verbindungsgelenks. Es ist hier die Anordnung des Spannelements 4 in dem Verbindungsgelenk 2 zu sehen. Auch ist das Gewinde G1 zwischen Spannelement 4 und Klemmelement 6 zu sehen.

Somit ist das Klemmelement 6 über das Gewinde G1 mit dem Spannelement 4 verbunden. Auch wird hier ersichtlich, dass das Klemmelement 6 durch Bewegung des Spannelements 4 noch nach oben bewegt werden kann. Ebenfalls wird ersichtlich, dass das Klemmelement 6 an dem hier vorne dargestellten Übertragungselement 7 anliegt.

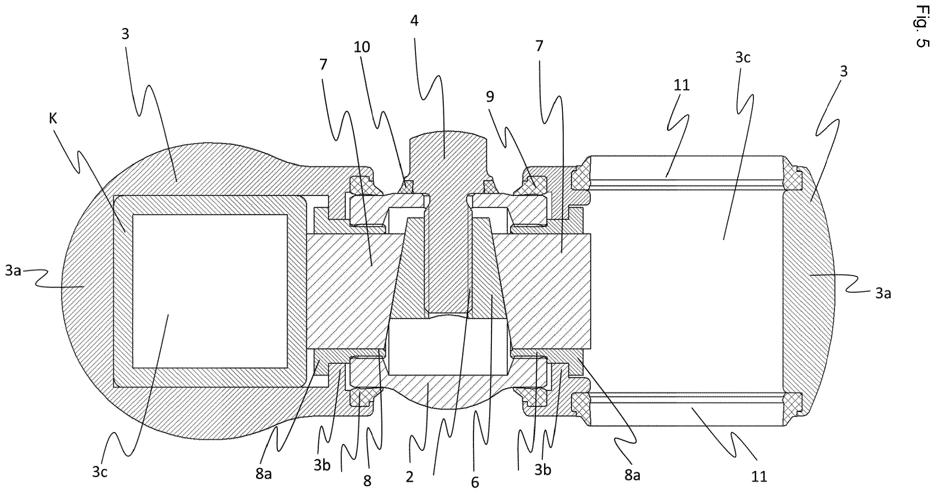

In Fig. 5 ist eine zweite Ausführungsform der vorliegenden Erfindung im gespannten Zustand zu sehen (im Längsschnitt). Hier ist statt einem runden ein eckiges Klemmteil K in der Klemmvorrichtung 1 geklemmt. Diese Ausführungsform entspricht im Wesentlichen der Fig. 2, nur ist hier das Klemmteil K direkt durch das Übertragungselement 7 geklemmt - eine separate Klemmbacke, wie in Fig. 2 gezeigt, ist hier also nicht nötig.

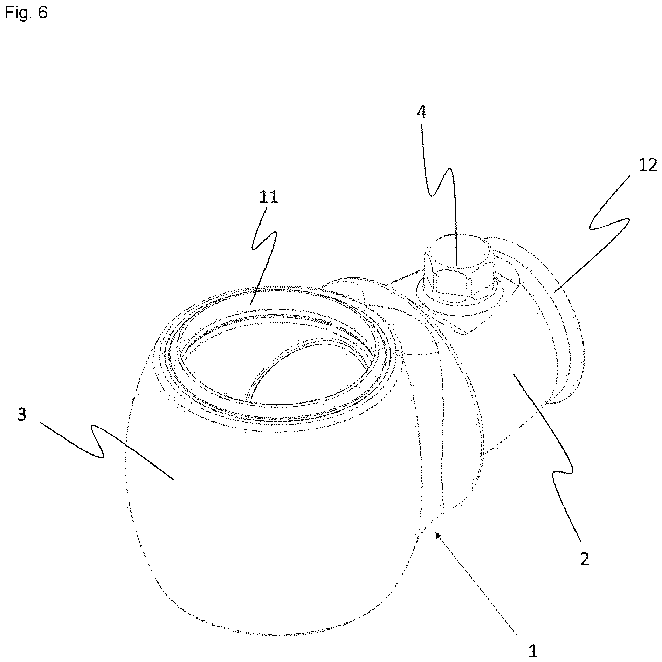

In Fig. 6 ist eine dritte Ausführungsform der vorliegenden Erfindung zu sehen. Hier umfasst die Klemmvorrichtung 1 lediglich einen Klemmabschnitt 3 mit entsprechenden zweiten Dichtelementen 11. Am anderen Ende des Verbindungsgelenks 2 ist ein Flansch (hier nicht gezeigt) mit einer Dichtscheibe 12 angebracht, mit welcher die Klemmvorrichtung beispielsweise an einer Ebene angebracht werden kann. Ebenfalls vorhanden ist ein Spannelement 4, in der vorliegenden Ausführungsform auch in Form einer Schraube, durch welches sowohl die Verspannung als auch die Drehbarkeit des einen Klemmabschnitts 3 gesteuert werden kann.

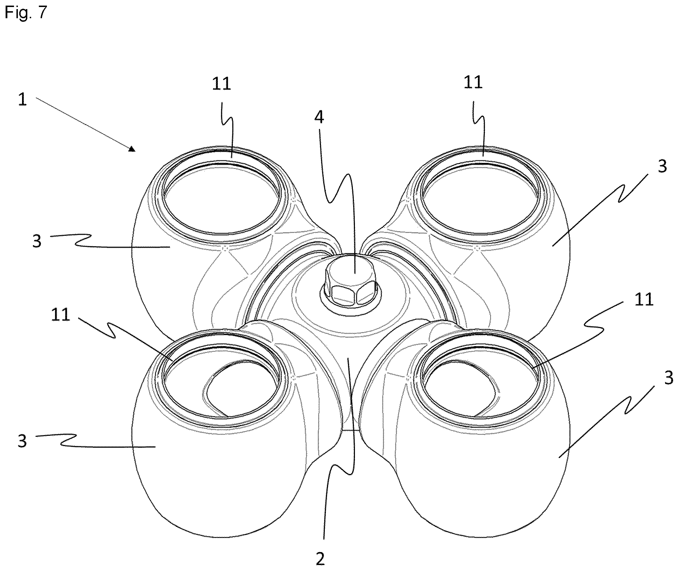

Fig. 7 zeigt eine vierte Ausführungsform der vorliegenden Erfindung, hier ist nämlich eine Klemmvorrichtung 1 mit vier Klemmabschnitten 3 mit entsprechenden zweiten Dichtelementen 11 dargestellt. Hier sind an einem Verbindungsgelenk vier Klemmabschnitte 3 angeordnet. Am Verbindungsgelenk 2 ist weiterhin ein Spannelement 4 in Form einer Schraube angeordnet, durch welches sowohl die Verspannung als auch die Drehbarkeit aller vier Klemmabschnitte 3 gesteuert werden können.

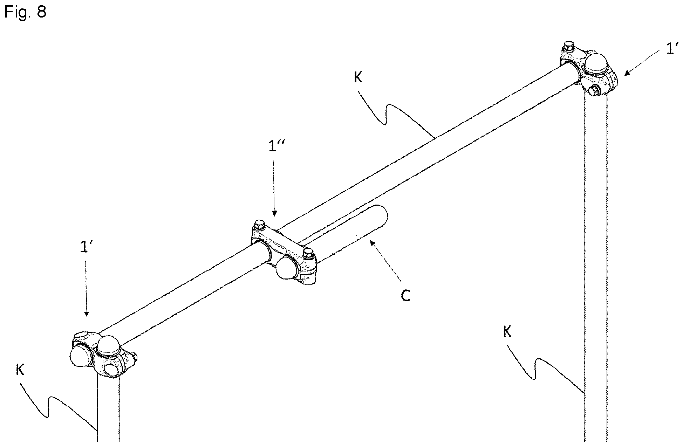

Fig. 8 zeigt ein System zur Befestigung einer Kamera C gemäß dem Stand der Technik. Hier sind jeweils zwei Klemmteile K, K im Winkel von 90° miteinander verbunden. Eine Kamera C ist zudem parallel zu einem Klemmteil K. Die Klemmvorrichtung 1' gemäß dem Stand der Technik ist jeweils in der Lage, entweder zwei Klemmteile K parallel zu verbinden oder diese in einem rechten Winkel von 90° zu verbinden. Die spezielle Klemmvorrichtung 1" gemäß dem Stand der Technik ist dazu angepasst, die Kamera C im Winkel von 180°, also parallel zu einem Klemmteil K, anzuordnen.

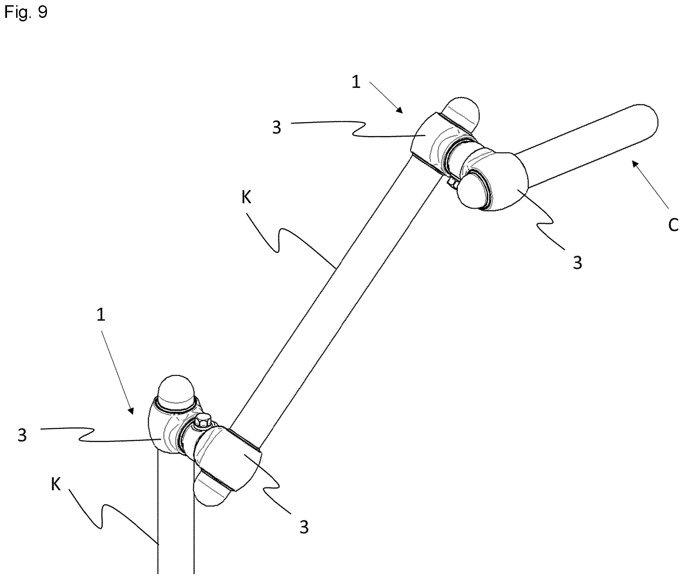

Fig. 9 zeigt eine Anwendungsform der Klemmvorrichtung gemäß der ersten Ausführungsform der vorliegenden Erfindung, wobei hier verschiedene Klemmteile K, im vorliegenden Fall Stangen, durch eine Klemmvorrichtung 1 geklemmt werden. Auch zur Verbindung einer Stange, also einem Klemmteil K, und einer Kamera C, kann eine Klemmvorrichtung 1 verwendet werden. Hier ist deutlich zu sehen, dass Winkel zwischen zwei Klemmteilen K durch Verdrehen der Klemmabschnitte 3 hier sehr variabel eingestellt werden können, so dass jede mögliche Position der Kamera C möglich ist.

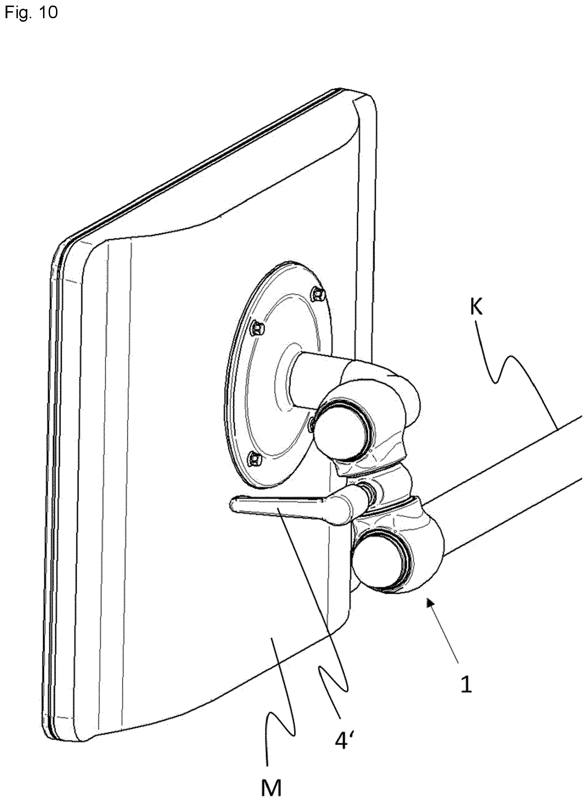

Fig. 10 zeigt eine weitere Anwendungsform der Klemmvorrichtung 1 gemäß der ersten Ausführungsform der vorliegenden Erfindung. Hier wird eine Anzeige- und Bedieneinheit M an einem Klemmteil K mit Hilfe der Klemmvorrichtung 1 verbunden. Statt einer Schraube ist hier ein alternatives Spannelement 4' vorgesehen, in diesem Fall ein Hebel. Auch mit diesem kann an der Klemmvorrichtung 1 eine offene und geschlossene Position ausgewählt werden, wobei in der offenen Position eine Bewegung der Klemmteile K in der Klemmvorrichtung möglich ist und weiterhin der Winkel zwischen beiden Klemmteilen K variabel eingestellt werden kann. In der geschlossenen Position sind weder die Winkel noch die Position der Klemmteile veränderbar.

Die vorliegende Erfindung ist nicht auf die oben dargestellte Ausführungsformen beschränkt.

Beispielsweise wäre es möglich, das Spannelement 4 als hydraulische Einrichtung auszubilden, so dass die Bewegung des Klemmelements K abhängig von einem Öldruck innerhalb des Verbindungsgelenks 2 gesteuert wird.

Ferner wäre es auch möglich, anstelle einer Schraube eine Zahnradkombination mit entsprechendem Betätigungsmechanismus als Spannelement 4 vorzusehen.

Auch könnte das Klemmelement 6 als Pyramidenstumpf ausgebildet sein. Dies hätte allerdings bei der Montage Nachteile. Auch wäre es beispielsweise möglich, anstelle des Klemmelements 6 ein plastisch verformbares Teil einzubauen, was durch Quetschen die Übertragungselemente 7 nach außen drücken würde. Auch ein Exzenter wäre als Klemmelement möglich.

Die vorliegende Erfindung beinhaltet eine Klemmvorrichtung 1 zum Verbinden von Klemmteilen K, wobei durch Bewegung eines einzigen Spannelements 4 sowohl mindestens ein Klemmabschnitt 3 relativ zu einem Verbindungsgelenk 2 bzw. zwei Klemmabschnitte 3 gegeneinander verdrehbar sind, als auch durch Festspannen von mindestens einer Klemmbacke 5, die Klemmteile K in dem mindestens einen Klemmabschnitt 3 verklemmt werden können. Somit ist durch Bewegung eines einzigen Spannelements 4 sowohl eine Klemmung als auch ein Fixieren und ein Freigeben einer Rotation des mindestens einen Klemmabschnitts möglich. Diese Klemmvorrichtung 1 ist einfach zu handhaben, sehr variabel, und trägt auch den Vorschriften der hygienegerechten Gestaltung Rechnung, da hier keinerlei Spalte, Hohlräume oder Gewinde freiliegen, in welchen sich Schmutz ansammeln könnte.

## Patentansprüche

1. Klemmvorrichtung (1) zum Verbinden und Klemmen von Klemmteilen (K), umfassend ein Verbindungsgelenk (2), mindestens einen Klemmabschnitt (3) mit jeweiligem Übertragungselement (7) sowie ein Spannelement (4), wobei das Spannelement (4) am Verbindungsgelenk (2) angeordnet ist und sich in einer ersten Endposition (E1) in einem gespannten Zustand befindet, und sich in einer zweiten Endposition (E2) in einem entspannten Zustand befindet,
wobei im gespannten Zustand das mindestens eine Übertragungselement (7) gegen jeweils ein Klemmteil (K) drückt, wodurch das Klemmteil (K) zwischen jeweils einem Klemmabschnitt (3) und einem Übertragungselement (7) geklemmt ist und somit fixiert ist,
und im entspannten Zustand ein Klemmteil (K) in einem Klemmabschnitt (3) bewegbar ist,
wobei der mindestens eine Klemmabschnitte (3) im entspannten Zustand relativ zum Verbindungsgelenk (2) verdrehbar ist und im gespannten Zustand am Verbindungsgelenk (2) fixiert ist,
wobei im Verbindungsgelenk (2) ferner ein Klemmelement (6) vorgesheen ist, das an mindestens einer Seite eine schräge Fläche aufweist, welche jeweils an einer schrägen Fläche mindestens eines Übertragungselements (7) anliegt, so dass eine Translationsbewegung des Klemmelements (6) eine Translationsbewegung des mindestens einen Übertragungselements (7) hervorruft, wobei die Translationsbewegung des Klemmelements (6) eine andere Richtung hat wie die Translationsbewegung des mindestens einen Übertragungselements (7).

2. Klemmvorrichtung (1) gemäß Anspruch 1, wobei im gespannten Zustand das mindestens eine Übertragungselement (7) in Richtung des dem Verbindungsgelenk (2) abgewandten Endes (3a) des Klemmabschnittes (3) verschoben ist, so dass ein Klemmteil (K) an das dem Verbindungsgelenk (2) abgewandten Ende (3a) des Klemmabschnittes (3) drückt, wodurch im Klemmabschnitt (3) geklemmte Klemmteile (K) fixierbar sind,
und im entspannten Zustand das mindestens eine Übertragungselement (7) in Richtung des Verbindungsgelenks (2) verschoben ist, wodurch in dem Klemmabschnitt (3) ein Klemmteil (K) bewegbar ist.

3. Klemmvorrichtung (1) gemäß einem der vorhergehenden Ansprüche, wobei die Bewegeungsrichtung der Translationsbewegung des Klemmelements (6) rechtwinkling zur Bewegungsrichtung der Translationsbewegung des mindestens einen Übertragungselements (7) ist.

4. Klemmvorrichtung (1) gemäß einem der vorhergehenden Ansprüche, wobei das Spannelement (4) eine Schraube ist und im Inneren des Verbindungsgelenks (2) mit dem Klemmelement (6) durch ein Gewinde (G1) verbunden ist, und das Klemmelement (6) durch Drehen der Schraube (4) entlang des Gewindes (G1) bewegbar ist.

5. Klemmvorrichtung (1) gemäß einem der vorhergehenden Ansprüche, wobei am Verbindungsgelenk (2) an mindestens einer Seite eine Buchse (8) vorgesehen ist, welche einen ringförmig angeordneten Vorsprung (8a) aufweist, und wobei
der mindestens eine Klemmabschnitt (3) einen Vorsprung (3b) aufweist, welcher mit dem Vorsprung (8a) der Buchse (8) im Eingriff steht, so dass der mindestens eine Klemmabschnitt (3) am Verbindungsgelenk (2) im entspannten Zustand drehbar ist.

6. Klemmvorrichtung (1) gemäß Anspruch 5, wobei im entspannten Zustand der Vorsprung (3b) des mindestens einen Klemmabschnitts (3) mit Spiel (S) jeweils zwischen dem Verbindungsgelenk (2) und dem Vorsprung (8a) der mindestens einen Buchse (8) positioniert ist und somit relativ zum Verbindungsgelenk (2) drehbar ist,
und im gespannten Zustand der Vorsprung (3b) des mindestens einen Klemmabschnitts (3) gegen den Vorsprung (8a) der Buchse (8) gedrückt wird, so dass der mindestens eine Klemmabschnitt (3) durch eine reibschlüssige Verbindung an dem Vorsprung (8a) der Buchse (8) fixiert ist und relativ zum Verbindungsgelenk (2) nicht drehbar ist.

7. Klemmvorrichtung (1) gemäß einem der vorhergehenden Ansprüche, wobei jeweils eine Klemmbacke (5) an einem Übertragungselement angebracht ist, die jeweils dazu angepasst ist, zumindest teilweise an der Umfangsfläche eines Klemmteils (K) anzuliegen.

8. Klemmvorrichtung (1) gemäß einem der vorhergehenden Ansprüche 4 bis 7, wobei unter dem Kopf der Schraube (4) ein erstes Dichtelement (9) vorgesehen ist.

9. Klemmvorrichtung (1) gemäß einem der vorhergehenden Ansprüche, wobei zwischen dem mindestens einen Klemmabschnitt (3) und dem Verbindungsgelenk (2) ein erstes Dichtelement (9) vorgesehen ist,
und/oder an den Öffnungen des mindestens einen Klemmabschnitts (3) zweite Dichtelemente (11) vorgesehen sind, welche dazu angepasst sind, sich an die Außenfläche der Klemmteile (K) anzupassen.

10. Klemmvorrichtung (1) gemäß einem der vorhergehenden Ansprüche, die dazu angepasst ist, rohrförmige, polygonale oder elliptische Klemmteile (K) zu klemmen.

11. Klemmvorrichtung (1) gemäß einem der vorhergehenden Ansprüche 5 bis 10, wobei die Buchse (8) mit dem Verbindungsgelenk (2) formschlüssig, vorzugsweise mit einem Gewinde oder Widerhaken, verbunden ist.

12. Klemmvorrichtung (1) gemäß einem der vorhergehenden Ansprüche 5 bis 11, wobei an dem Verbindungsgelenk (2) zwei Klemmabschnitte (3) mit jeweiligen Klemmbacken (5) vorgesehen sind, und im entspannten Zustand die Vorsprünge (3b) der Klemmabschnitte (3) mit Spiel (S) jeweils zwischen dem Verbindungsgelenk (2) und den Vorsprüngen (8a) der Buchsen (8) positioniert sind ist und gegeneinander drehbar sind,
und im gespannten Zustand die Vorsprünge (3b) der Klemmabschnitte (3) gegen die Vorsprünge (8a) der Buchsen (8) gedrückt werden, so dass die Klemmabschnitte (3) durch eine jeweils reibschlüssige Verbindung an den Vorsprüngen (8a) der Buchsen (8) fixiert sind gegeneinander nicht verdrehbar sind.

13. System, bestehend aus einer Klemmvorrichtung (1) gemäß einem der vorhergehenden Ansprüche 1 bis 10 und mindestens einem Klemmteil (K), welches rohrförmig ist oder einen polygonalen oder elliptischen Querschnitt aufweist.

14. Verwendung eines Systems gemäß Anspruch 13 zur Ausrichtung und Fixierung einer Kamera oder zur variablen Einstellung und Fixierung einer Anzeige- und Bedieneinheit (M).

## Claims

1. Clamping device (1) for the connection and clamping of clamping parts (K),
comprising a connecting joint (2), at least one clamping section (3) with a respective transmission element (7), and a tensioning element (4),
wherein the tensioning element (4) is arranged on the connecting joint (2) and is in a clamped state in a first end position (E1), and is in a relaxed state in a second end position (E2),
wherein in the tensioned state, the at least one transmission element (7) presses against a respective clamping part (K), whereby the clamping part (K) is clamped between a respective clamping section (3) and a transmission element (7) and is thus fixed,
and in the relaxed state, a clamping part (K) is movable in a clamping section (3),
wherein the at least one clamping section (3) is rotatable relative to the connecting joint (2) in the relaxed state and is fixed to the connecting joint (2) in the clamped state,
wherein in the connecting joint (2), a clamping element (6) is further provided which comprises on at least one side an inclined surface which respectively abuts against an inclined surface of at least one transmission element (7), such that a translational movement of the clamping element (6) causes a translational movement of the at least one transmission element (7), wherein the translational movement of the clamping element (6) has a different direction than the translational movement of the at least one transmission element (7).

2. Clamping device (1) according to claim 1, wherein
in the clamped state, the at least one transmission element (7) is displaced in the direction of the end (3a) of the clamping section (3) facing away from the connecting joint (2), so that a clamping part (K) presses against the end (3a) of the clamping section (3) facing away from the connecting joint (2), whereby clamping parts (K) clamped in the clamping section (3) can be fixed in place,
and in the relaxed state, the at least one transmission element (7) is displaced in the direction of the connecting joint (2), whereby a clamping part (K) is movable in the clamping section (3).

3. Clamping device (1) according to one of the preceding claims, wherein the direction of movement of the translational movement of the clamping member (6) is perpendicular to the direction of movement of the translational movement of the at least one transmission member (7).

4. Clamping device (1) according to any one of the preceding claims, wherein the tensioning element (4) is a screw and is connected inside the connecting joint (2) to the clamping element (6) by a thread (G1), and the clamping element (6) is movable along the thread (G1) by turning the screw (4).

5. Clamping device (1) according to one of the preceding claims, wherein
on the connecting joint (2), a bushing (8) is provided on at least one side which comprises an annularly arranged projection (8a), and wherein
the at least one clamping section (3) comprises a projection (3b) which is in engagement with the projection (8a) of the bushing (8), so that the at least one clamping section (3) on the connecting joint (2) is rotatable in the relaxed state.

6. Clamping device (1) according to claim 5, wherein
in the relaxed state, the projection (3b) of the at least one clamping section (3) is positioned with clearance (S) respectively between the connecting joint (2) and the projection (8a) of the at least one bushing (8) and is thus rotatable relative to the connecting joint (2)
and in the clamped state, the projection (3b) of the at least one clamping section (3) is pressed against the projection (8a) of the bushing (8), so that the at least one clamping section (3) is fixed to the projection (8a) of the bushing (8) by a frictionally engaged connection and is not rotatable relative to the connecting joint (2).

7. Clamping device (1) according to any one of the preceding claims, wherein a respective clamping jaw (5) is attached to a transmission element, each of which is adapted to abut at least partially against the peripheral surface of a clamping part (K).

8. Clamping device (1) according to any of the preceding claims 4 to 7, wherein a first sealing element (9) is provided under the head of the screw (4).

9. Clamping device (1) according to one of the preceding claims, wherein a first sealing element (9) is provided between the at least one clamping section (3) and the connecting joint (2),
and/or second sealing elements (11) are provided at the openings of the at least one clamping section (3), which are adapted to adapt to the outer surface of the clamping parts (K).

10. Clamping device (1) according to any of the preceding claims which is adapted to clamp tubular, polygonal or elliptical clamping parts (K).

11. Clamping device (1) according to any of the preceding claims 5 to 10, wherein the bushing (8) is connected to the connecting joint (2) in a form-fit way, preferably by a thread or barb.

12. Clamping device (1) according to one of the preceding claims 5 to 11, wherein two clamping sections (3) with respective clamping jaws (5) are provided on the connecting joint (2),
and in the relaxed state, the projections (3b) of the clamping sections (3) are positioned with clearance (S) respectively between the connecting joint (2) and the projections (8a) of the bushes (8) and are rotatable relative to one another,
and in the clamped state, the projections (3b) of the clamping sections (3) are pressed against the projections (8a) of the bushings (8), so that the clamping sections (3) are fixed against each other by a respective frictionally engaged connection to the projections (8a) of the bushings (8) and cannot rotate relative to each other.

13. System comprising a clamping device (1) according to any one of the preceding claims 1 to 10 and at least one clamping member (K) which is tubular or has a polygonal or elliptical cross-section.

14. Use of a system according to claim 13 for aligning and fixing a camera or for variably adjusting and fixing a display and control unit (M).

## Revendications

1. Dispositif de serrage (1) pour relier et serrer des pièces de serrage (K), comprenant une articulation de liaison (2), au moins une section de serrage (3) avec un élément de transmission (7) respectif ainsi qu'un élément de tension (4),
l'élément de tension (4) étant disposé sur l'articulation de liaison (2) et se trouvant dans un état tendu dans une première position d'extrémité (E1), et dans un état détendu dans une deuxième position d'extrémité (E2),
dans lequel, à l'état tendu, le au moins un élément de transmission (7) appuie respectivement contre une pièce de serrage (K), ce qui fait que la pièce de serrage (K) est serrée entre une section de serrage (3) respective et un élément de transmission (7) et est ainsi fixée,
et, à l'état détendu, une pièce de serrage (K) est déplaçable dans une section de serrage (3),
l'au moins une section de serrage (3) étant tournable par rapport à l'articulation de liaison (2) à l'état détendu et étant fixée à l'articulation de liaison (2) à l'état tendu,
dans l'articulation de liaison (2), un élément de serrage (6) étant en outre prévu que présente sur au moins un côté une surface inclinée qui s'applique respectivement contre une surface inclinée d'au moins un élément de transmission (7), de sorte qu'un mouvement de translation de l'élément de serrage (6) provoque un mouvement de translation du au moins un élément de transmission (7), le mouvement de translation de l'élément de serrage (6) ayant une autre direction que le mouvement de translation du au moins un élément de transmission (7).

2. Dispositif de serrage (1) selon la revendication 1, dans lequel,
à l'état tendu, le au moins un élément de transmission (7) est déplacé en direction de l'extrémité (3a) de la section de serrage (3) qui est opposée à l'articulation de liaison (2), de sorte qu'une pièce de serrage (K) appuie sur l'extrémité (3a) de la section de serrage (3) qui est opposée à l'articulation de liaison (2), ce qui permet de fixer des pièces de serrage (K) serrées dans la section de serrage (3),
et, à l'état détendu, l'au moins un élément de transmission (7) est déplacé en direction de l'articulation de liaison (2), ce qui permet de déplacer une pièce de serrage (K) dans la section de serrage (3).

3. Dispositif de serrage (1) selon l'une quelconque des revendications précédentes, dans lequel la direction de déplacement du mouvement de translation de l'élément de serrage (6) est perpendiculaire à la direction de déplacement du mouvement de translation dudit au moins un élément de transmission (7).

4. Dispositif de serrage (1) selon l'une quelconque des revendications précédentes, dans lequel l'élément de tension (4) est une vis et est relié à l'intérieur de l'articulation de liaison (2) à l'élément de serrage (6) par un filetage (G1), et l'élément de serrage (6) est déplaçable le long du filetage (G1) par rotation de la vis (4).

5. Dispositif de serrage (1) selon l'une des revendications précédentes, dans lequel
une douille (8) est disposée sur au moins un côté de l'articulation de liaison (2), laquelle présente une saillie (8a) disposée en forme d'anneau, et dans lequel
l'au moins une section de serrage (3) présente une saillie (3b) qui est en prise avec la saillie (8a) de la douille (8), de sorte que l'au moins une section de serrage (3) peut être tournée sur l'articulation de liaison (2) à l'état détendu.

6. Dispositif de serrage (1) selon la revendication 5, dans lequel,
à l'état détendu, la saillie (3b) de ladite au moins une portion de serrage (3) est positionnée avec un jeu (S) respectivement entre l'articulation de liaison (2) et la saillie (8a) de ladite au moins une douille (8) est ainsi tournable par rapport à l'articulation de liaison (2),
et, à l'état serré, la saillie (3b) de la au moins une section de serrage (3) est pressée contre la saillie (8a) de la douille (8), de sorte que la au moins une section de serrage (3) est fixée par une liaison par friction à la saillie (8a) de la douille (8) et n'est pas tournable par rapport à l'articulation de liaison (2).

7. Dispositif de serrage (1) selon l'une quelconque des revendications précédentes, dans lequel une mâchoire de serrage (5) est respectivement montée sur un élément de transmission et est respectivement adaptée pour venir en appui au moins partiellement contre la surface périphérique d'une partie de serrage (K).

8. Dispositif de serrage (1) selon l'une quelconque des revendications précédentes 4 à 7, dans lequel un premier élément d'étanchéité (9) est prévu sous la tête de la vis (4).

9. Dispositif de serrage (1) selon l'une des revendications précédentes, dans lequel
un premier élément d'étanchéité (9) est prévu entre ladite au moins une portion de serrage (3) et l'articulation de liaison (2),
et/ou des deuxièmes éléments d'étanchéité (11) sont prévus au niveau des ouvertures de ladite au moins une section de serrage (3), lesquels sont adaptés pour s'adapter à la surface extérieure des éléments de serrage (K).

10. Dispositif de serrage (1) selon l'une quelconque des revendications précédentes, adapté pour serrer des pièces de serrage (K) tubulaires, polygonales ou elliptiques.

11. Dispositif de serrage (1) selon l'une des revendications précédentes 5 à 10, dans lequel la douille (8) est reliée à l'articulation de liaison (2) par complémentarité de forme, de préférence par un filetage ou une barbelure.

12. Dispositif de serrage (1) selon l'une des revendications précédentes 5 à 11, dans lequel il est prévu sur l'articulation de liaison (2) deux tronçons de serrage (3) avec des mâchoires de serrage (5) respectives,
et, à l'état détendu, les saillies (3b) des tronçons de serrage (3) sont positionnées avec un jeu (S) respectivement entre l'articulation de liaison (2) et les saillies (8a) des douilles (8) et sont tournables les unes par rapport aux autres,
et, à l'état tendu, les saillies (3b) des sections de serrage (3) sont pressées contre les saillies (8a) des douilles (8), de sorte que les sections de serrage (3) sont fixées par une liaison respective par friction sur les saillies (8a) des douilles (8) et ne sont pas tournables les unes par rapport aux autres.

13. Système constitué d'un dispositif de serrage (1) selon l'une quelconque des revendications précédentes 1 à 10 et d'au moins une pièce de serrage (K) de forme tubulaire ou présentant une section polygonale ou elliptique.

14. Utilisation d'un système selon la revendication 13 pour orienter et fixer une caméra ou pour régler et fixer de manière variable une unité d'affichage et de commande (M).
